# EUROPEAN PATENT SPECIFICATION

(11) **EP 1 898 337 B1**
(45) Date of publication and mention of the grant of the patent: **16.12.2009**
(21) Application number: 07253408.4
(22) Date of filing: 29.08.2007
(51) Int. Cl.: G06K 7/10, A61B 5/00

(54) **Medical apparatus with a radio-frequency detection device.**
Medizinische Vorrichtung mit einer Radiofrequenzdetektionsvorrichtung
Appareil médical avec dispositif de détection par radio-fréquence

(30) Priority: 08.09.2006 DE 102006042346
(43) Date of publication of application: 12.03.2008
(73) Proprietor: Dräger Medical AG & Co. KG, 23558 Lübeck (DE)
(72) Inventor: Gertz, Marc-Oliver, 23554 Lübeck (DE); Schermeier, Olaf, 23560 Lübeck (DE); Wotha, Gerd, 23626 Warnsdorf (DE)
(74) Representative: Greenwood, John David

(56) References cited:
- EP-A- 1 227 434
- EP-A- 1 434 159
- JP-A- 8 263 610
- JP-A- 11 238 103
- US-A1- 2006 151 619

## Description

The invention relates to a medical apparatus with a housing and with a radio-frequency detection device, wherein the radio-frequency detection device is operatively connected to an aerial for the detection of a radio-frequency marking. With medical apparatus, in particular with respiratory apparatuses with at least one radio-frequency detection device for detecting a radio-frequency marking associated with a respiratory tube (an example is disclosed in EP 1 410 767 A1), there is the problem that, with an arrangement of components of the medical apparatus inside the housing, account must be taken of the fact that an aerial of a radio-frequency detection device is often formed in the shape of a loop, in particular by etching, on a printed circuit board of a transmitter of the radio-frequency detection device. Since the aerial of the radio-frequency detection device is designed for the detection of the radio-frequency marking by means of a magnetic near field, the aerial together with the transmitter must be arranged in a region or adjacent to the region which forms the detection range for the radio-frequency marking.

There is known from US 2006.0164.251 A1 an RFID reading device, which can be held in the hand. The RFID reading device comprises a housing with a perimeter in the region of an inner edge. The RFID reading device also comprises a dipole aerial designed in a natural size. The dipole aerial comprises two aerial elements, which are each coupled by means of a symmetry transfer. The aerial has a virtually uniform aerial gain over an angular range.

The RFID reading device also comprises a transmitting-receiving unit, which is connected to the dipole aerial by means of suitable cable. The transmitting-receiving unit is designed to transmit and receive signals. The aerial elements of the dipole aerial are wound along the perimeter around an inner edge of the housing.

The present invention seeks to provide a medical apparatus which enables an improved arrangement of the components inside the housing of the medical apparatus.

Accordingly, there is provided a medical apparatus as claimed in the claims.

The radio-frequency detection device comprises a transmitter and an at least partially electrically conductive shielding, which surrounds at least the transmitter in such a way that electromagnetic radiation generated by the transmitter or a field generated by the transmitter, in particular a magnetic or electromagnetic field, is effectively shielded to the exterior and the aerial is arranged inside the housing and outside the shielding. As a result, the radio-frequency detection device or the transmitter can be arranged at virtually any point inside the housing. Also to advantage, the aerial can be arranged, independently of the radio-frequency detection device or independently of the transmitter, in a region which is provided to form a detection range, generated by a magnetic near field of the aerial. The housing preferably forms at least one part of the medical apparatus that provides mechanical support and/or protects against mechanical influences. To advantage, components of the medical apparatus are thus protected against contact by a user. To advantage, the housing can have a mechanical and/or functionally active shaping, and includes, in particular, a mechanical connection for a respiratory tube.

In a preferred embodiment, the aerial is arranged at least partially or completely directly on a housing inner surface, in particular a housing wall.

The aerial forms at least partially a housing inner surface, in particular in the region of a tube connection. To advantage, space in the interior of the housing can thus be saved. Also to advantage, the aerial can thus generate a detection range which includes a region of a housing wall of the housing.

In a preferred variant of embodiment, the aerial is in particular connected at least in sections to the housing. The aerial is also preferably connected to the housing by means of an adhesive substance, for example an adhesive. In a preferred embodiment, the aerial comes into contact at least in sections with the housing inner surface.

In an exemplary embodiment, the aerial is formed by an electrically conductive loop. For example, such an electrically conductive loop can be formed by a wire, in particular a wire with a round, with a rectangular, in particular with a square or with a differently shaped cross-section. To advantage, the aerial can thus be adapted to a housing shape. The area is preferably formed in such a way that the aerial conforms to the housing inner surface and is directly in contact with the latter at least in sections.

In a preferred embodiment, the aerial is formed by an electrically conductive layer. The electrically conductive layer is also preferably vapour-deposited on the housing inner surface. To advantage, the electrically conductive layer can thus form a part of the housing inner surface. In another embodiment, the electrically conductive layer forming the aerial is deposited galvanically on the housing inner surface and preferably connected to the latter. As an alternative to vapour deposition on the housing inner surface, the aerial, in particular the electrically conductive layer, can be deposited on the housing inner surface by means of cathode sputtering.

In an advantageous embodiment, the aerial is enclosed in a housing wall. The aerial can preferably have been enclosed at least in sections in the housing wall during injection-moulding of the housing. In another embodiment, the aerial is integrated into a housing wall. For this purpose, the housing can for example have a groove for the accommodation of the aerial at least in sections.

The housing in this embodiment is preferably formed at least partially by a thermoplastic.

Further advantageous materials for a housing are polystyrene, polyamide, polypropylene, polyethylene, polycarbonate, polyamide, or a combination of the latter. Advantageous materials for an aerial are copper, aluminium, iron, or an alloy which comprises at least one of the aforementioned materials.

In an advantageous embodiment, the aerial is formed by a longitudinally extending band with at least one flat side. Also to advantage, the aerial is formed by a longitudinally extending band with two flat sides. To advantage, the aerial can thus conform to the housing inner wall. Also to advantage, the aerial can thus conform to a housing inner wall that is shaped round, one that is shaped straight or one that is shaped in an angular fashion. Conformance to the housing inner wall preferably includes contact, in particular uninterrupted contact, of the housing inner wall with the aerial.

In a preferred embodiment, a loop shape of the aerial has at least one offset longitudinal portion. To advantage, the aerial can thus be shaped to an offset housing inner region.

In a preferred variant of embodiment, a loop shape of the aerial has at least one longitudinal portion running in a round shape. To advantage, the aerial can thus be shaped to a housing region running in a round shape.

A course of the loop formed by means of the aerials preferably has at least one rotary and/or at least one translatory degree of freedom. The aerial, especially in the case with a flat wall shape, can thus be guided along a housing inner wall around corners and/or curves. The aerial also preferably runs in the direction of 2 translatory axes Tx, Ty and forms radii along a spatial angular direction Rz.

The aerial also preferably runs along 3 translatory axes Tx, Ty, Tz and forms radii along all of 2 spatial angular directions Rz, Rx. The aerial also preferably runs along 3 translatory axes Tx, Ty, Tz and forms radii along all of 3 spatial angular directions Rx, Ry, Rz.

In a preferred embodiment, the aerial is connected to a compensating element, which is arranged outside the shielding. The compensating element also preferably comprises a rotary capacitor and is designed to change and fix a resonance frequency, in particular a resonance frequency of the radio-frequency detection device forming a carrier frequency. In an advantageous embodiment, the aerial is connected to the transmitter by means of a specially shielded connection line. To advantage, the aerial can thus be arranged spaced apart from the transmitter.

Embodiments of the invention will now be described with reference to the accompanying drawings, of which:
Figure 1 is a schematic diagram of an example of embodiment of a medical apparatus with a radio-frequency detection system;
Figure 2 is a schematic diagram of an example of embodiment of a housing of a medical apparatus with an aerial of a radio-frequency detection device;
Figure 3 is a schematic diagram of examples of embodiment of cross-sections of an aerial for a radio-frequency detection device.

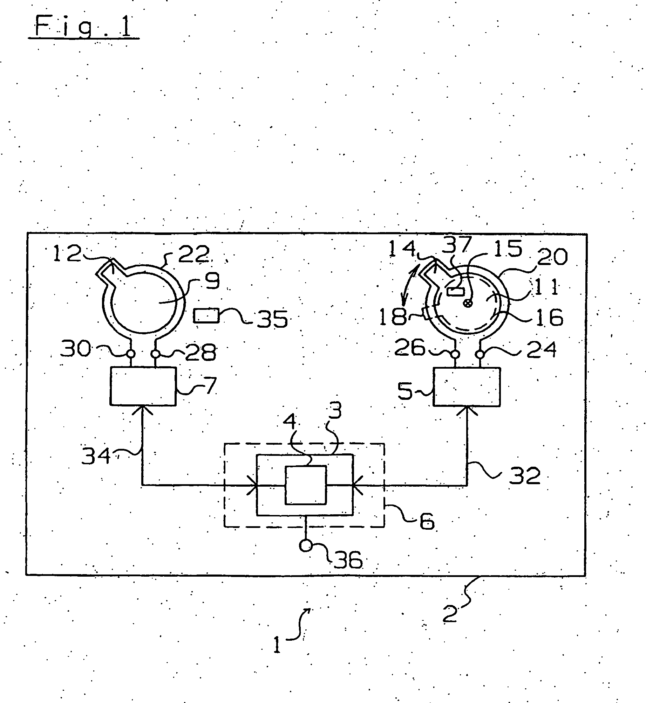

Figure 1 shows schematically an example of embodiment of a medical apparatus 1. Medical apparatus 1 has a housing 2. Medical apparatus 1 also has a radio-frequency detection device 3 with an adapter 5 and an adapter 7.

Housing 2 has a opening 9 and a opening 11, which are each designed for the introduction of an end of a respiratory tube. Opening 9 has a recess 12, which is configured for the passage of a correspondingly configured cam of a respiratory tube. Opening 11 has a recess 14, which is configured for the passage of a correspondingly configured cam 18 of a connection piece 16 of an end section of a respiratory tube.

Connection piece 16 is designed as a bayonet connection, whereby cam 18 is configured so as to be guided through recess 14 and, by rotation about an axis 15, to secure in a form-fit manner connection piece 16 against moving back along axis 15. Cam 18 is configured so as to engage in a form-fit manner behind a corresponding projecting region or a housing wall section of housing 2 in the region of opening 11 and thus to secure in a form-fit manner connection piece 16 against moving back.

Radio-frequency detection device 3 is connected at least indirectly to an aerial 20 and at least indirectly to an aerial 22.

Radio-frequency detection device 3 has a transmitter 4 for a radio-frequency signal and is enclosed by a shielding 6 in such a way that a magnetic or electromagnetic field generated by transmitter 4 is sufficiently shielded. The shielding can be formed by a shielding metal plate or a shielding grid and is at least partially electrically conductive.

A shielding can also be formed by a plastic housing vapour-deposited with an electrically conductive layer, whereby the plastic can comprise polystyrene, polyamide, polypropylene, polyethylene, polycarbonate, polyamide, or a combination of the latter.

Aerial 20 is designed loop-shaped and surrounds opening 11 at least in sections at the periphery. Aerial 20 has a detection range which extends radially outwards along a loop-course direction. Aerial 20 in this example of embodiment is designed as a wire loop, which has a rectangular, a circular or a round-shaped cross-section. Aerial 20 also surrounds recess 14, so that aerial 20 in the region of recess 14 has a corresponding - in this example of embodiment - rectangular shape. Aerial 20 has a connection 24 and a connection 26 and is connected via connection 24 and connection 26 to adapter 5. Aerial 20 lies directly adjacent to a housing wall of housing 2 along its loop periphery up to a section in the region of connection 24 and up to a section in the region of connection 26, so that aerial 20 conforms to the housing wall of housing 2.

A radio-frequency marking 37, also referred to in the following as RFID tag 37, is shown, RFID tag 37 being connected to connection piece 16 in the region of an end provided for the passage through opening 11. RFID tag 37 is thus arranged in the detection range of aerial 20 and can be detected by aerial 20. Radio-frequency detection device 3 is designed to generate a radio-frequency signal and to transmit the latter at the output side to aerial 20 or to aerial 22.

Radio-frequency detection device 3 is connected via a connection line 32 to adapter 5. Adapter 5 has at least one capacitor and/or one inductor, whereby the capacitor and/or the inductor are provided for matching a resonance frequency to the detection of RFID tag 37. The capacitor can be a rotary capacitor.

RFID Tag 37 is designed to remove field energy from a magnetic near field generated by aerial 20 and to modulate the magnetic near field in dependence on marking information represented by RFID tag 37. The magnetic near field is thus amplitude-modulated by RFID tag 37. This amplitude modulation brings about a reactive effect on a current generating the magnetic near field, said current flowing in radio-frequency detection device 3.

Radio-frequency detection device 3 is designed to detect these changes in current generated by modulation and has a demodulator for this purpose. Radio-frequency detection device 3 has an output 36 and is designed, in the event of the presence of a predetermined radio-frequency marking, in particular RFID tag 37, to generate a marking signal and to output the latter to output 36. Radio-frequency detection device 3 is also connected via a connection line 34 to adapter 7. Adapter 7 is connected at the output side via a connection 28 and a connection 30 to aerial 22, which is designed in a loop shape. An aerial 22 surrounds opening 9 and recess 12. Also shown is a radio-frequency marking 35, which is connected to the housing wall of housing 2 in the region of opening 9 and is arranged in the detection range of aerial 22.

Radio-frequency marking 35 is provided for the testing of radio-frequency detection device 3, whereby radio-frequency detection device 3 is designed to detect radio-frequency marking 35 via aerial 22 and to generate a test signal representing the detection result. Radio-frequency detection device 3 can thus perform a self-test.

Radio-frequency detection device 3 shown in figure 1 can operate with a resonance frequency in the region of 125 kHz, 135 kHz, 13.56 MHz, 27 MHz, 433 MHz or in the range between 1 GHz and 10 GHz. The previously described load modulation method, according to which the previously described radio-frequency detection device and the radio-frequency marking can operate, can be a modulation method according to an ASK method (ASK = amplitude shift keying) or a PSK method (PSK = phase shift keying).

A radio-frequency marking can have a modulator which is designed to modulate a magnetic near field according to stored marking information. The radio-frequency marking can be a surface wave transponder.

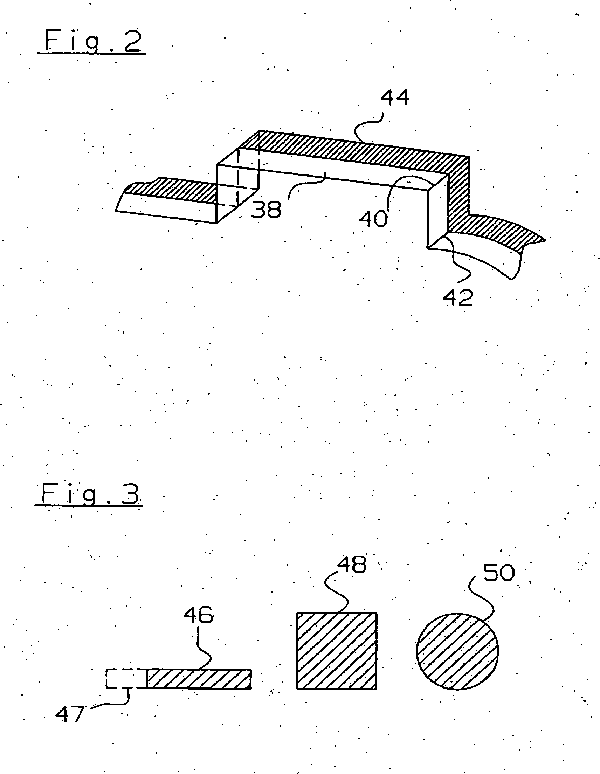

Figure 2 shows an example of embodiment of an aerial 44 for a radio-frequency detection device, in particular in a medical apparatus, whereby aerial 44 is vapour-deposited or electrolytically deposited on a surface of a housing 38. Aerial 44 in this example of embodiment forms a longitudinally extending thin band strip, whereby the longitudinally extending thin band strip has a thickness dimension in the range between 10 µm and 200 µm. Aerial 44 is guided around a fold 40 and a fold 42 of housing 38 and, in the region of fold 40 and in the region of fold 42, is formed corresponding to an offset and a following round housing course.

Aerial 22 shown in figure 1 and aerial 20 shown in figure 1 can - unlike that described in figure 1 - be designed according to aerial 44. For this purpose, housing 2 can for example have a tubular section in the region of opening 11 and/or in the region of opening 9, whereby a tube wall of the tubular section surrounds opening 9 and opening 11 respectively, in such a way that connection piece 16 can be introduced into a lumen of the tubular section surrounding the tube wall.

Aerial 44 can for example be arranged on an outer surface of the tubular section. In this way, aerial 44 can surround the lumen enclosed by the tubular section and for example detect RFID tag 37. In the case of an aerial designed according to aerial 44 for housing 2, connections 24, 26 and, respectively, 28 and 30 can each have contact springs, which are designed to produce a galvanic contact with aerial 44.

Housing region 38 shown in figure 2 can for example be a housing region of housing 2 shown in figure 1 in the region of recess 14, in particular housing region 38 can be a part of the previously described tubular section.

Figure 3 shows an example of embodiment of cross-sectional shapes of an aerial for a radio-frequency detection device, in particular a medical apparatus. A cross-section 46 of a strip-shaped aerial is shown. The strip-shaped aerial can for example be laminated into a plastic film. The plastic film can be a thermoplastic, in particular polyethylene, polypropylene or polyamide. Cross-section 46 has a thickness 47. Exemplary thicknesses for an aerial with a cross-section 46 are in the range between 100 and 400 microns.

A cross-sectional shape of an aerial for a radio-frequency detection device can have a rectangular cross-section, in particular a square cross-section 48. In another embodiment, an aerial for a radio-frequency detection device has a circular cross-section 50.

Exemplary materials for aerial 44 shown in figure 2, which is deposited as a thin layer on the housing surface, are silver, copper, or graphite or a combination thereof.
Exemplary materials for the aerials shown in figures 1 and 3 are copper, silver, or graphite or a combination thereof.

## Claims

1. A medical apparatus (1) with a housing (2, 38) for a respiratory tube associated with a radio- frequency marking (35,37), said apparatus having a mechanical connection in the form of a perforation for connecting said respiratory tube, and a radio-frequency detection device (3), wherein the radio-frequency detection device (3) is operatively connected to an aerial (20, 22) for the detection of said radio-frequency marking (35, 37), wherein
the radio-frequency detection device (3) comprises a transmitter (4); **characterized in that**
there is an at least partially electrically conductive shielding (6) which surrounds at least the transmitter (4) in such a way that a field generated by the transmitter is effectively shielded to the exterior;
the aerial forms at least partially an inner surface of the housing in the region of the respiratory tube connection; and
the aerial is arranged inside the housing and outside the shielding.

2. The medical apparatus according to claim 1. in which the aerial is arranged at least partially or completely directly on a housing inner surface.

3. The medical apparatus according to claim 1 or 2, in which the aerial is connected in sections to the housing (2, 38).

4. The medical apparatus according to any one of the preceding claims, in which the aerial (20, 22, 44) is formed by at least one electrically conductive loop.

5. The medical apparatus according to any one of the preceding claims, in which the aerial (44) is formed by an electrically conductive layer.

6. The medical apparatus according to claim 5, in which the aerial (44) is vapour-deposited or electrolytically deposited on the housing inner surface.

7. The medical apparatus according to any one of preceding claims 1 to 4, in which the aerial (44) is formed by a longitudinally extending band (46) with at least one flat side.

8. The medical apparatus according to any one of the preceding claims, in which the aerial (20, 22, 44) has a loop shape with at least one offset longitudinal portion.

9. The medical apparatus according to any one of the preceding claims, in which the aerial (20, 22, 44) has a loop shape with at least one longitudinal portion running in a round shape.

10. The medical apparatus according to any one of preceding claims 4 to 9, in which a course along a loop formed by means of the aerial (20, 22, 44) has at least one rotary and/or at least one translatory degree of freedom.

11. The medical apparatus according to any one of the preceding claims, in which the aerial is connected to a compensating element (5, 7), which is arranged outside the shielding (6).

12. The medical apparatus according to any one of the preceding claims, in which the aerial (20, 22, 44) is connected by means of a specially shielded connection line (32, 34) to the transmitter (4).

## Patentansprüche

1. Medizinische Vorrichtung (1) mit einem Gehäuse (2, 38) für eine Atemröhre, die mit einer Radiofrequenzkennung (35, 37) versehen ist, wobei die Vorrichtung eine mechanische Verbindung in Form einer Perforation zum Verbinden der Atemröhre hat und mit einer Radiofrequenzdetektorvorrichtung (3), wobei die Radiofrequenzdetektorvorrichtung (3) operativ verbunden ist mit einer Antenne (20, 22) zur Erfassung der Radiofrequenzkennung (35, 37) und wobei die Radiofrequenzdetektorvorrichtung (3) einen Transmitter (4) umfasst, **dadurch gekennzeichnet, dass** dort zumindest eine teilweise elektronisch leitende Abschirmung (6) vorgesehen ist, welche mindestens den Transmitter (4) in einer Form umgibt, dass das vom Transmitter erzeugte Feld effektiv nach außen abgeschirmt wird,
dass die Antenne zumindest teilweise eine Innenfläche des Gehäuses in dem Bereich der Atemröhrenverbindung bildet und
dass die Antenne im Inneren des Gehäuses und außerhalb der Abschirmung angeordnet ist.

2. Medizinische Vorrichtung nach Anspruch 1, in welcher die Antenne mindestens teilweise oder komplett direkt an der Innenfläche des Gehäuses angebracht ist.

3. Medizinische Vorrichtung nach Anspruch 1 oder 2, in welcher die Antenne abschnittsweise mit dem Gehäuse (2, 38) verbunden ist.

4. Medizinische Vorrichtung nach einem der vorangehenden Ansprüche, in welcher die Antenne (20, 22, 40) aus mindestens einer elektrischen leitenden Schleife besteht.

5. Medizinische Vorrichtung nach einem der vorangehenden Ansprüche, in welcher die Antenne (44) aus einer elektrisch leitenden Schicht besteht.

6. Medizinische Vorrichtung nach Anspruch 5, in welcher die Antenne (44) entweder auf der Innenseite des Gehäuses aufgedampft oder elektrolytisch aufgetragen ist.

7. Medizinische Vorrichtung nach einem der vorangehenden Ansprüche 1 bis 4, in welcher die Antenne (44) aus einem längsverlängerten Ring (46) mit mindestens einer flachen Seite besteht.

8. Medizinische Vorrichtung nach einem der vorangehenden Ansprüche, in welcher die Antenne (20, 22, 44) eine Kreisform hat mit mindestens einer längsgerichteten Abschnittskröpfung.

9. Medizinische Vorrichtung nach einem der vorangehenden Ansprüche, in welcher die Antenne (20, 22, 44) eine Kreisform hat mit mindestens einem längsgerichteten Abschnitt, der in einer Rundbahn verläuft.

10. Medizinische Vorrichtung nach einem der vorangehenden Ansprüche 4 bis 9, in welcher die Antenne (20, 22, 40) eine geformte Bahn entlang eines Kreises aufweist mit mindestens einer Rotation und/oder mindestens einem translatorischen Freiheitsgrad.

11. Medizinische Vorrichtung nach einem der vorangehenden Ansprüche, in welcher die Antenne verbunden ist mit einem Kompensierungselement (5, 7), welches außerhalb der Abschirmung (6) vorgesehen ist.

12. Medizinische Vorrichtung nach einem der vorangehenden Ansprüche, in welcher die Antenne (20, 22, 44) verbunden ist mit dem Transmitter (4) mittels einer speziellen abgeschirmten Verbindungsleitung (32, 34).

## Revendications

1. Appareil médical (1) comprenant un boîtier (2, 38) pour un tube respiratoire associé à un marqueur à radiofréquence (35, 37), ledit appareil comprenant une liaison mécanique en forme de perforation pour brancher ledit tube respiratoire, et un dispositif de détection de radiofréquence (3), dans lequel le dispositif de détection de radiofréquence (3) est fonctionnellement relié à une antenne (20, 22) pour la détection dudit marqueur à radiofréquence (35, 37), dans lequel
le dispositif de détection de radiofréquence (3) comprend un émetteur (4) ; **caractérisé en ce que**
un blindage au moins partiellement conducteur électriquement (6) entoure au moins l'émetteur (4) de manière à ce qu'un champ généré par l'émetteur soit efficacement masqué par rapport à l'environnement externe ;
l'antenne forme au moins partiellement une surface interne du boîtier dans la zone de la liaison du tube respiratoire ; et
l'antenne est disposée à l'intérieur du boîtier et à l'extérieur du blindage.

2. Appareil médical selon la revendication 1, dans lequel l'antenne est disposée au moins partiellement ou entièrement directement sur une surface interne du boîtier.

3. Appareil médical selon la revendication 1 ou 2, dans lequel l'antenne est reliée au boîtier (2, 38) par sections.

4. Appareil médical selon l'une quelconque des revendications précédentes, dans lequel l'antenne (20, 22, 44) est formée par au moins une boucle conductrice.

5. Appareil médical selon l'une quelconque des revendications précédentes, dans lequel l'antenne (44) est formée par une couche conductrice électriquement.

6. Appareil médical selon la revendication 5, dans lequel l'antenne (44) est déposée par dépôt en phase vapeur ou par dépôt électrolytique sur la surface interne du boîtier.

7. Appareil médical selon l'une quelconque des revendications précédentes 1 à 4, dans lequel l'antenne (44) est formée par une bande (46) longitudinale présentant au moins un côté plat.

8. Appareil médical selon l'une quelconque des revendications précédentes, dans lequel l'antenne (20, 22, 44) a une forme en boucle avec au moins une partie longitudinale décalée.

9. Appareil médical selon l'une quelconque des revendications précédentes, dans lequel l'antenne (20, 22, 44) a une forme en boucle avec au moins une partie longitudinale qui s'étend en forme arrondie.

10. Appareil médical selon l'une quelconque des revendications précédentes 4 à 9, dans lequel une course le long d'une boucle formée au moyen de l'antenne (20, 22, 44) a au moins un degré de liberté en rotation et/ou en translation.

11. Appareil médical selon l'une quelconque des revendications précédentes, dans lequel l'antenne est reliée à un élément de compensation (5, 7) qui est disposé à l'extérieur du blindage (6).

12. Appareil médical selon l'une quelconque des revendications précédentes, dans lequel l'antenne (20, 22, 44) est reliée à l'émetteur (4) au moyen d'une ligne de connexion spécialement blindée (32, 34).
